# EUROPEAN PATENT SPECIFICATION

(11) **EP 4 198 785 B1**
(45) Date of publication and mention of the grant of the patent: **27.05.2026**
(21) Application number: 21863531.6
(22) Date of filing: 23.08.2021
(51) Int. Cl.: G06F 21/62, G06F 3/06, G06F 16/11, G06F 16/172, G06F 16/245

(54) **DATA MASKING METHOD, DATA MASKING APPARATUS AND STORAGE DEVICE**
DATENMASKIERUNGSVERFAHREN, DATENMASKIERUNGSVORRICHTUNG UND SPEICHERVORRICHTUNG
PROCÉDÉ DE MASQUAGE DE DONNÉES, APPAREIL DE MASQUAGE DE DONNÉES ET DISPOSITIF DE STOCKAGE

(30) Priority: 01.09.2020 CN 202010905437; 27.10.2020 CN 202011164736
(43) Date of publication of application: 21.06.2023
(73) Proprietor: Huawei Technologies Co., Ltd., Shenzhen, Guangdong 518129 (CN)
(72) Inventor: HUANG, Heng, Shenzhen, Guangdong 518129 (CN)
(74) Representative: Maiwald GmbH
(86) International application number: PCT/CN2021/113947
(87) International publication number: WO 2022/048464

(56) References cited:
- WO-A1-2017/024957
- CN-A- 106 959 955
- CN-A- 108 509 805
- CN-A- 109 960 944
- CN-A- 111 090 883
- US-A1- 2015 113 659
- US-A1- 2017 272 472
- US-A1- 2019 377 895

## Description

### TECHNICAL FIELD

This application relates to the field of storage technologies, and in particular, to a data masking method, a data masking apparatus, and a storage device.

### BACKGROUND

Data masking (data masking) is also referred to as data bleaching, data anonymization, or data deformation. Data masking means performing data deformation on sensitive information according to a masking rule to implement reliable protection of sensitive privacy data. For customer security data or commercial sensitive data, real data is reconstructed for testing without violating system rules. For example, data masking needs to be performed on personal information such as ID card numbers, mobile numbers, card numbers, and customer numbers.

An existing masking manner is that production data is copied from a production environment to special storage for development and testing, offline masking processing is performed through a masking server, and after the masking processing is completed, only a copy of the data on which the masking processing has been performed is provided for developers and testers. However, the offline masking processing takes a long time, and an additional masking server needs to be deployed, so that development costs increase.

United States patent application US 2015/0113659 A1 describes a system that masks data objects across a plurality of different data resources.

United States patent application US 2019/0377895 A1 describes a method for data masking that is based on metadata associated with a database.

United States patent application US 2017/0272472 A1 describes a data privacy manager solution that includes a number of different components performing data security procedures.

### SUMMARY

This application provides a data masking method, a data masking apparatus, and a storage device, to improve masking efficiency.

The invention is set out in the appended set of claims.

A first aspect provides a data masking method. The method is performed by a storage device. For example, a read-data command sent by a host is received, and the read-data command is used to request to-be-read data. The storage device obtains the to-be-read data in response to the read-data command. Then, masking processing is performed on the to-be-read data to obtain target data. And then the target data is sent to the host.

The foregoing read-data command is an input/output (I/O) command. It can be learned that masking performed on data is implemented on an IO path. In other words, the storage device performs masking on the to-be-read data in a process of responding to the read-data command. Compared with an offline masking manner, online masking improves masking efficiency. After the host receives data on which the masking has been performed, the host can directly test the data or use the data for another purpose without performing masking on the data by using a special masking device. In addition, because the storage device performs the masking processing on the data, no additional masking server needs to be deployed, so that costs are reduced.

Optionally, the to-be-read data is unstructured data, for example, a file.

Optionally, the performing masking processing on the to-be-read data includes: determining whether the masking processing needs to be performed on the to-be-read data; obtaining a corresponding masking manner through matching based on a type of the to-be-read data when a determining result is that the masking processing needs to be performed on the to-be-read data, where the masking manner includes level-1 masking processing or level-2 masking processing; and performing the masking processing on the to-be-read data in the masking manner corresponding to the to-be-read data. For example, in the storage device, a whitelist or a blacklist can be set to filter a file on which the masking processing does not need to be performed. Generally, some file types, such as binary files, do not contain sensitive information. Therefore, the masking processing does not need to be performed on such files. Whether the masking processing needs to be performed on the to-be-read data is determined before the masking processing, so that these files on which the masking processing does not need to be performed can be filtered, thereby further improving masking efficiency.

Optionally, the masking manner includes at least level-1 masking, level-2 masking, and level-3 masking. The level-1 masking applies to a file that does not need to be decoded, such as a text file or a log file. The level-2 masking applies to a file that needs to be decoded, such as a Word file or an Excel file. The level-3 masking applies to a file type that cannot be resolved by the level-1 masking and the level-2 masking. Different masking methods are used for different file types. Therefore, the masking method is more targeted and a masking process is more efficient.

Optionally, a masking engine of the level-3 masking used for execution may be disposed inside the storage device, or may be disposed outside the storage device. If the masking engine of the level-3 masking used for execution is disposed outside the storage device, when a masking engine inside the storage engine determines that one type of file needs to be processed by the level-3 masking, the masking engine inside the storage device may transfer the file to the masking engine of the level-3 masking by using an interface of the storage device. After the masking engine of the level-3 masking completes the masking processing, the masking engine of the level-3 masking transfers the file on which the masking processing has been performed to the masking engine inside the storage device by using the interface. And then the masking engine inside the storage device sends the file on which the masking has been performed to the host. In this implementation, even if the masking processing is completed by using an external masking engine, the online masking can still be ensured.

Optionally, for all of the level-1 masking, the level-2 masking, and the level-3 masking, the masking processing may be completed in the following manner. For example, the to-be-read data is divided into a plurality of file segments. For each file segment in the plurality of file segments, whether the file segment hits a file segment on which masking has been performed and that is stored in the storage device. If the file segment hits the file segment on which the masking has been performed and that is stored in the storage device, the level-1 masking processing is not performed on the file segment. If the file segment misses the file segment on which the masking has been performed and that is stored in the storage device, the level-1 masking processing is performed on the file segment. Then, the file segments on which the masking processing has been performed are combined to obtain the target data. Some file segments on which the masking processing has been performed are retained in a memory. If these file segments are hit, the masking processing does not need to be performed again. This improves masking efficiency and reduces IO latency.

Optionally, a file segment on which the level-1 masking, the level-2 masking, or the level-3 masking is performed may be stored in the memory to improve a hit rate of file segment during next masking.

Optionally, the method according to the first aspect further includes a step of prefetching data and performing the masking processing on the data. For example, when a condition of prefetching data is met, other to-be-read data is obtained from a hard disk of the storage device. The masking processing is performed on the other to-be-read data. When a command that is sent by the host and that is used to read the other to-be-read data is received, the other to-be-read data on which the masking has been performed is sent to the host. The other to-be-read data is not obtained in response to an IO request, but is read from the hard disk to the memory when the condition for prefetching data is met, and is sent to the masking engine for the masking processing. The data obtained on which the masking processing has been performed may be stored in the memory. When the storage device executes a command used to read the other to-be-read data, the storage device does not need to perform the masking processing again, thereby reducing IO latency.

Optionally, the condition for prefetching data includes, but is not limited to, the following cases: the other to-be-read data is modified; it is found that a type of the other to-be-read data meets a specified type of data that is to be prefetched; a snapshot for the other to-be-read data is created; or a specified prefetching period arrives.

A second aspect of this application provides a data masking apparatus. The apparatus is located inside a storage device, and is configured to implement the method according to any implementation of the first aspect.

A third aspect of this application provides a storage device, including a processor and a memory. The memory stores a program, and the processor executes the program to implement the method according to any implementation of the first aspect. In the storage device provided in the third aspect, the masking engine is implemented by using software.

A fourth aspect of this application provides a storage device, including a processor and a masking engine. The processor cooperates with the masking engine to implement the method provided in any implementation of the first aspect. In the storage device provided in the fourth aspect, the masking engine is implemented by a hardware component.

A fifth aspect of this application provides a host. The host includes a processor and a masking engine. The processor is configured to send a read-data command to a storage device, and receive data sent by the storage device based on the read-data command. The masking engine is configured to perform masking processing on the data to obtain target data.

A masking engine is disposed inside the host provided in the fifth aspect. Therefore, the masking processing may be completed on a host side. This process can be implemented on an IO path or offline.

Optionally, the masking engine is specifically configured to determine whether the masking processing needs to be performed on the to-be-read data; obtain a corresponding masking manner through matching based on a type of the to-be-read data when a determining result is that the masking processing needs to be performed on the to-be-read data, where the masking manner includes level-1 masking processing or level-2 masking processing; and perform the masking processing on the to-be-read data in the masking manner corresponding to the to-be-read data.

Optionally, when the masking manner corresponding to the to-be-read data is the level-1 masking processing, the masking engine is specifically configured to divide the to-be-read data into a plurality of file segments. The level-1 masking processing is performed on the plurality of file segments. The file segments on which the level-1 masking processing has been performed are combined to obtain the target data.

Optionally, when the masking engine performs the level-1 masking processing on the plurality of file segments, the masking engine is specifically configured to determine, for each file segment in the plurality of file segments, whether the file segment hits a file segment on which masking has been performed and that is stored in the storage device; and if the file segment hits the file segment on which the masking has been performed and that is stored in the storage device, skip performing the level-1 masking processing on the file segment; or if the file segment misses the file segment on which the masking has been performed and that is stored in the storage device, perform the level-1 masking processing on the file segment.

Optionally, when the masking manner corresponding to the to-be-read data is the level-2 masking processing, the masking engine is specifically configured to decode the to-be-read data to obtain decoded file content. The decoded file content is divided into a plurality of file segments. The level-2 masking processing is performed on the plurality of file segments. The file segments on which the level-2 masking processing has been performed are encoded to obtain the target data.

A sixth aspect of this application provides a data masking method. The method is performed by a host to implement a function of the host described in the fifth aspect.

A seventh aspect of this application provides a computing program product. The computing program product includes computer program code. When the computer program code is run, the method performed by a storage device according to the foregoing aspects is performed.

An eighth aspect of this application provides a computer readable storage medium. The computer readable storage medium stores a computer program, and when the computer program is run, the method performed by a storage device according to the foregoing aspects is implemented.

### BRIEF DESCRIPTION OF DRAWINGS

FIG. 1 is a diagram of an application scenario according to an embodiment;
FIG. 2 is a diagram of another application scenario according to an embodiment;
FIG. 3 is a schematic diagram depicting a structure of a storage device according to an embodiment;
FIG. 4 is a schematic diagram depicting a structure of another storage device according to an embodiment;
FIG. 5 is a schematic diagram depicting a structure of a masking engine according to an embodiment;
FIG. 6 is a schematic diagram depicting a structure of another masking engine according to an embodiment;
FIG. 7 is a schematic flowchart of a data masking method according to an embodiment;
FIG. 8 is a schematic flowchart of another data masking method according to an embodiment;
FIG. 9 is a schematic flowchart of another data masking method according to an embodiment;
FIG. 10 is a schematic flowchart of a data prefetching method according to an embodiment; and
FIG. 11 is a schematic diagram depicting a structure of a data masking apparatus according to an embodiment.

### DESCRIPTION OF EMBODIMENTS

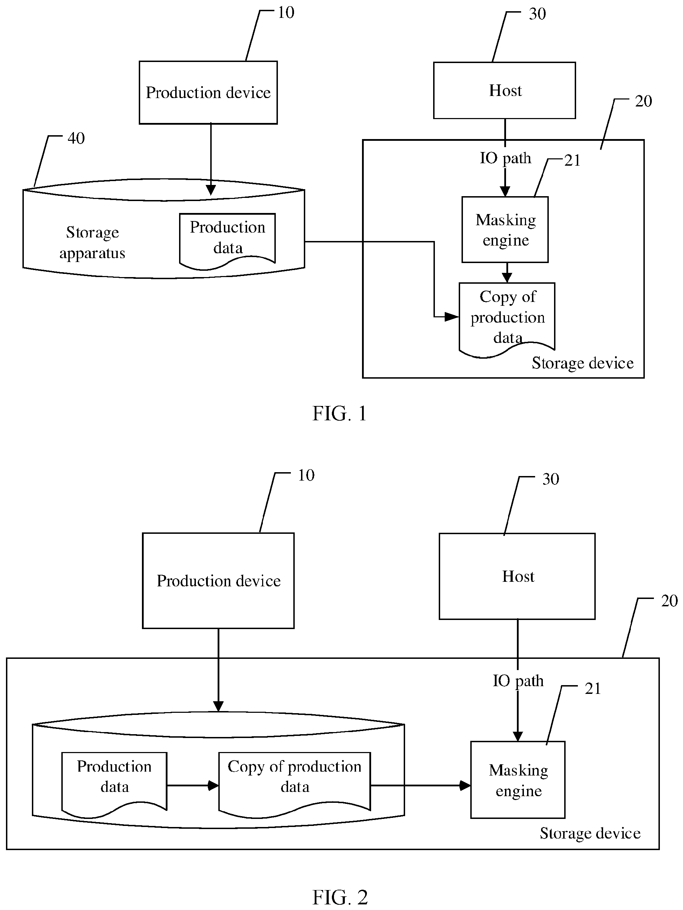

FIG. 1 provides a data masking system, including a production device 10, a storage device 20, and a host 30. The production device 10 may be any form of electronic devices, such as a server, a desktop computer, a mainframe computer, and any other type of computing device that includes a processor and a memory. The production device 10 stores production data in a storage apparatus 40. The production data is original data from a user, and may include information related to user privacy. To prevent user privacy leakage, masking processing needs to be performed on the production data. The storage apparatus 40 may be a memory located inside the production device 10, or may be a memory of a device located outside the production device 10. This external device may communicate with the production device 10, and is configured to store the production data from the production device 10. This external device may be any form of electronic devices, such as a server, a desktop computer, a mainframe computer, a storage array, and any other type of computing device that includes a processor and a memory.

The host 30 mainly means a development/testing server, and a developer/tester obtain data from the storage device 20 by using the host 30 for product development or testing. In this embodiment, the data provided by the storage device 20 to the host 30 is data on which the masking processing has been performed, so as to protect user privacy. In terms of a product form, the host 30 may be any form of electronic devices, such as a server, a desktop computer, a mobile device, and any other type of computing device that includes a processor and a memory.

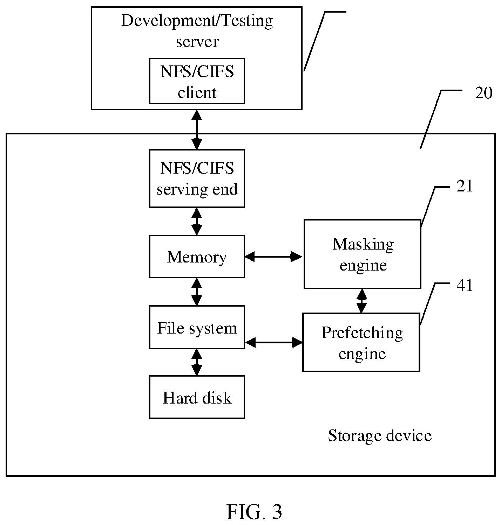

The storage device 20 may be a network attached storage (Network Attached Storage, NAS) device. The NAS device is a dedicated high-performance file storage device, and provides file data for a user to access by using a network and file sharing protocol. A protocol used between the storage device 20 and the host 30 includes a TCP/IP protocol used for data transmission, a CIFS protocol and an NFS protocol used for a network file service, and the like. In this case, the host 30 is configured with an NFS/CIFS client (as shown in FIG. 3), and a file is accessed by using the NFS/CIFS client to indicate a file name, a file location, or another attribute in a read command. Correspondingly, the storage device 20 is configured with an NFS/CIFS serving end, and the NFS/CIFS serving end parses the read command. Because a file system records a location of the file in a hard disk, the storage device 20 may convert the file name and the file location in the received read command into an address of block data to obtain data. The storage device 20 may also be a storage area network (SAN) device, and the SAN device communicates with the host 30 by using a fiber channel network. The SAN device in this embodiment has a file system. Therefore, the block data may also be accessed in a form of a file. In addition to the NAS device and the SAN device, the storage device 20 may be another device having a storage function, and a data masking system may include one or more storage devices 20. A quantity of the storage devices 20 is not limited in this embodiment.

Because the production data stored in the production device 10 is original data, if the masking processing is performed directly on the original data, the data is damaged and difficult to be recovered. Therefore, in a scenario shown in FIG. 1, the production data is sent to the storage device 20 to be stored as a copy, and the storage device 20 performs the masking processing on the copy instead of the original data.

An application scenario shown in FIG. 2 is similar to the scenario shown in FIG. 1. A difference is that the production device 10 may directly store the production data in the storage device 20. To prevent the original production data from being damaged, the storage device 20 creates a copy of the production data, and performs the masking processing on the copy. In other words, in the scenario shown in FIG. 2, both the production data and the copy of the production data are located in the storage device 20. There are a plurality of manners for creating a copy, such as replication, snapshot, and clone. Details are not described herein again.

A masking engine 21 is disposed inside the storage device 20. As shown in FIG. 3, online masking may be implemented on data on an IO path by using the masking engine 21. For example, when the host 30 sends a read-data command to the storage device 20 to read data, a processor (not shown in FIG. 3) of the storage device 20 determines whether the data is hit in a memory, and if the data is hit, the masking engine 21 is notified, and then the masking engine 21 obtains the data from the memory of the storage device, and writes the data into the memory after the masking processing. Then, the processor returns the data on which the masking processing has been performed to the host 30. If the data is missed, the data is read into the memory by using the file system, and then the masking engine 21 is notified, and then the masking engine 21 obtains the data from the memory of the storage device for performing the masking processing. The file system is built on the hard disk, and is a part of an operating system of the storage device 20. Writing data into the file system is actually writing the data into the hard disk, and the data may be accessed in a form of a file. The masking engine 21 may be a software module, or may be a hardware component. When the masking engine 21 is a software module, a function of the masking engine 21 is implemented by a processor by invoking a corresponding program instruction. When the masking engine 21 is a hardware component, the masking engine 21 is a programmable electronic component configured to perform the masking processing and the like on data, for example, a dedicated processing chip such as a data processing unit (data processing unit, DPU), a graphics processing unit (GPU), or an embedded neural-network processing unit (NPU). The dedicated preocessing chip has universality and programmability of a central processing unit (CPU), but is more special-purpose and can run more efficiently. The DPU is distinguished from the CPU by a high degree of parallelism (which requires processing a large quantity of requests). In this case, the masking engine 21 may have a memory, or may share one memory with the storage device 20. In addition, the masking engine 21 may also be disposed inside the host 30, and the host 30 directly performs the masking processing on the read data. A specific function of the masking engine 21 located inside the host 30 is similar to a specific function of the masking engine 21 located inside the storage device 20, except that in this case, the masking may be performed on the to-be-read data online or offline.

In some application scenarios, a prefetching engine 41 is further disposed inside the storage device 20. As mentioned above, if requested data in the memory is missed when the storage device 20 responds to the read command sent by the host 30, the storage device 20 needs to obtain the data from the file system. This causes latency and affects read performance. Therefore, the storage device 20 may be provided with the prefetching engine 41, and is configured to read some data from the file system in advance under a specific trigger condition, send the data to the masking engine for the masking processing, and store the data on which the masking processing has been performed in the memory. Subsequently, when the host 30 sends the read-data command to read the data, the data may be hit in the memory, and does not need to go through the masking processing again, thereby reducing latency and improving read performance. The prefetching engine 41 is optional rather than mandatory configuration in this embodiment.

Similar to the masking engine 21, the prefetching engine 41 may be a software module or a hardware component. When the prefetching engine 41 is a software module, a function of the prefetching engine 41 is implemented by a processor by invoking a corresponding program instruction. When the prefetching engine 41 is a hardware component, the prefetching engine 41 is a programmable electronic component configured to perform the masking processing and the like on data, for example, a dedicated processing chip such as a DPU, a GPU, or an NPU. When the prefetching engine 41 is a hardware component, the prefetching engine 41 may have a memory, or may share one memory with the storage device 20.

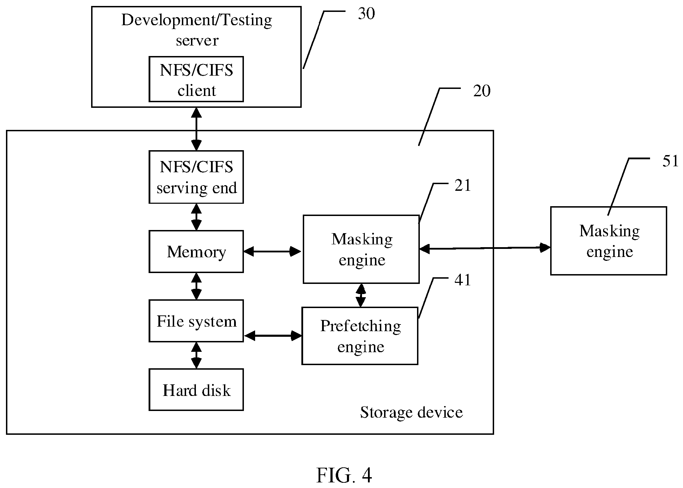

Because the masking engine 21 is disposed inside the storage device 20, a function of the masking engine 21 is also limited to some extent. The masking processing may also be performed on some specific types of data by using a peripheral masking engine 51 (refer to FIG. 4). The masking engine 51 is located outside the storage device 20, and is an independent device, which is dedicated to processing a relatively complex masking operation. The masking engine 51 may also be a device in a public cloud or a private cloud. When the masking engine 21 finds that the masking engine 21 cannot process a specific type of data, the masking engine 21 may transfer the data to the masking engine 51 by using an interface of the storage device 20, and the masking engine 51 performs the masking processing on the data and then sends the data to the masking engine 21. In addition, the masking engine 51 may be further configured to perform a function such as masking policy management. For example, different masking manners may be used for different types of data. The masking engine 51 pushes a masking policy to the masking engine 21. After identifying the type of the data according to the policy, the masking engine may select a corresponding masking manner to perform a masking operation. The masking policy is preset in the masking engine 51, and may be updated periodically. The updated policy needs to be pushed to the masking engine 21. Although the masking engine 51 may process a more complex masking operation and perform more refined management on data masking, the masking engine 51 in this embodiment is only an optional configuration. When the masking engine 51 is not set, the masking policy may be preset in the masking engine 21, or may be directly configured in the masking engine 21 in a running process of the device.

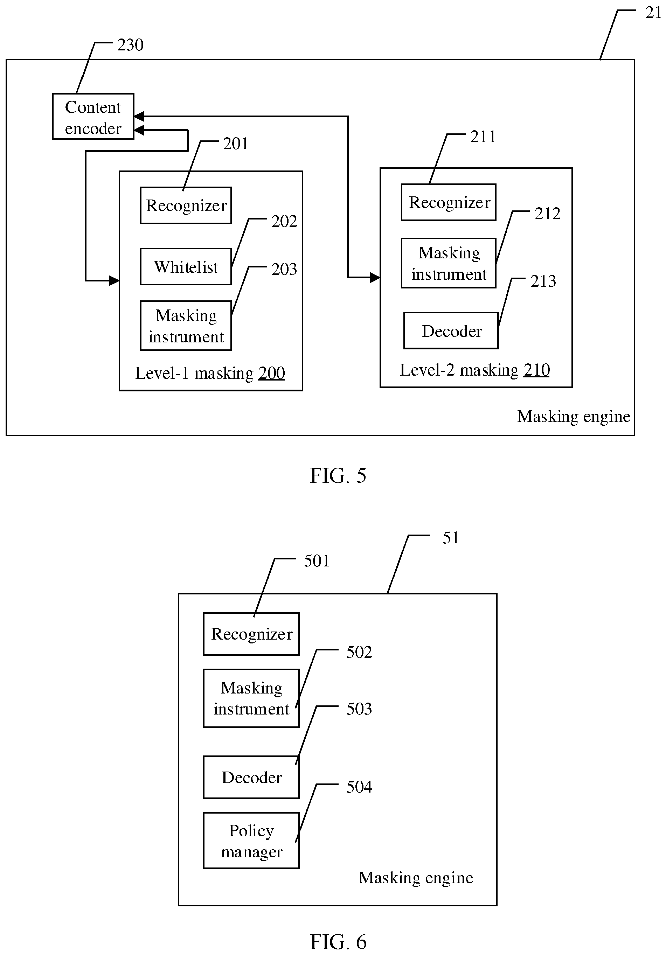

Referring to FIG. 5, FIG. 5 is a schematic diagram depicting a structure of a masking engine 21 according to an embodiment. As shown in FIG. 5, the masking engine 21 includes level-1 masking 200, level-2 masking 210, and a content encoder 230. Different file types correspond to different masking manners. For example, masking processing is performed on a file that does not need to be decoded, such as a text file and a log file, by using a level-1 masking manner. Masking processing is performed on a file that needs to be decoded, such as a Word and PDF file, by using a level-2 masking manner. The content encoder 230 is mainly configured to restore data on which the masking processing has been performed to a request object of a read command.

The level-1 masking 200 includes a recognizer 201, a whitelist 202, and a masking instrument 203. The recognizer 201 is configured to identify a data type. Data in this embodiment may be classified into structured data and unstructured data. The structured data means data in a fixed format (usually expressed in a two-dimensional table structure). Generally, the structured data is represented and stored in a relational database. The structured data usually includes tabular data, such as a database. In conclusion, the structured data depends on establishing a data model to store and process data based on this data model. The unstructured data means data that cannot be expressed in a two-dimensional logical table of a database. The unstructured data includes an office document, a text, a picture, XML, HTML, various types of report, an image, and audio/video information in all formats. In this embodiment, the masking processing is mainly performed on unstructured data, especially a file. The following uses a file as an example to describe the masking processing. Certainly, this embodiment does not exclude that the masking processing is performed on unstructured data other than a file, and even does not exclude that the masking processing is performed on structured data. The recognizer 201 may be specifically configured to identify a file type. In addition, the whitelist 202 records a file type of a file on which the masking processing does not need to be performed. For example, a binary file usually does not contain information related to user privacy. Therefore, a file type of the binary file may be recorded in the whitelist 202. After the recognizer 201 identifies the file type, the recognizer 201 filters the file according to the whitelist 202, to exclude some files that do not need to go through the masking processing. It may be understood that a function of the whitelist 202 may be replaced by a blacklist. The blacklist records a file type of a file on which the masking processing needs to be performed, and usage of the blacklist is similar to usage of the whitelist. In addition, even if the files are all non-decoded files, different masking manners may be used for different file types. Therefore, the file type identified by the recognizer 201 is used to determine whether the masking processing needs to be performed on the file, and is further used to determine which masking manner is used for the file. These masking manners (also referred to as masking rules) are all stored in the masking instrument 203, and the masking instrument 203 is a component specifically configured to perform the masking processing.

When the masking instrument 203 performs the masking processing on one file, the masking instrument 203 divides the file into several file segments, and then performs the masking processing on each file segment based on a masking manner corresponding to a file type of the file. If one or more of these file segments hit file segments on which the masking processing has been performed and that are stored in a memory, these hit file segments on which the masking processing does not need to be performed, and the file segments on which the masking processing has been performed and that are stored in the memory can be directly used. After the masking processing is performed on the file segment that is missed, the file segment on which the masking processing has been performed may be stored in the memory, so that the file segment can be hit when the masking processing is performed on another file next time, thereby improving masking efficiency.

The level-2 masking includes a recognizer 211, a decoder 213, and a masking instrument 212. The recognizer 211 is configured to identify a data type, and a function of the recognizer 211 is similar to a function of the recognizer 201 in the level-1 masking 200, except that the recognizer 211 is an optional configuration. If the recognizer 211 is not disposed in the level-2 masking, the recognizer 201 in the level-1 masking may identify a file type. A file that needs to be decoded may be sent by the level-1 masking to the level-2 masking, and the masking instrument 212 in the level-2 masking directly performs masking based on a masking manner corresponding to the file. If the file that needs to be decoded also includes a plurality of file types, and different file types correspond to different masking manners, in this case, the recognizer 211 needs to be set in the level-2 masking to identify the file type, so as to select a corresponding masking manner. Because the level-2 masking is mainly used to process a file that needs to be decoded, for example, a Word, Excel, and PDF file, a decoder 213 is disposed in the level-2 masking and is used to decode these types of files. In addition, after the masking processing is completed, the decoder 213 is further responsible for encoding these files. Masking manners corresponding to the file are stored in the masking instrument 212, and the masking instrument 212 is a component specifically configured to perform the masking processing.

Similar to a processing manner of the masking instrument 203, when the masking instrument 212 performs the masking processing on one file, the masking instrument 212 divides the file into several file segments, and then performs the masking processing on each file segment based on a masking manner corresponding to a file type of the file. If one or more of these file segments hit file segments on which the masking processing has been performed and that are stored in a memory, these hit file segments on which the masking processing does not need to be performed, and the file segments on which the masking processing has been performed and that are stored in the memory can be directly used. After the masking processing is performed on the file segment that is missed, the file segment on which the masking processing has been performed may be stored in the memory, so that the file segment can be hit when the masking processing is performed on another file next time, thereby improving masking efficiency.

An external masking engine 51 (as shown in FIG. 6) includes a recognizer 501, a masking instrument 502, a decoder 503, and a policy manager 504. A function of the recognizer 501 is consistent with a function of a built-in recognizer in the masking engine 21, and a function of the decoder 503 is consistent with a function of the decoder 213. Details are not described herein again. The masking instrument 502 is a component that performs the masking processing on a file. An execution process of the masking instrument 502 is similar to an execution process of the masking instrument 212 and the masking instrument 203, and details are not described herein again. A difference is that a file type to be processed by the masking engine 51 is different from a file type to be processed by the masking engine 21, and different masking manners are used for different file types. The policy manager 504 is configured to store a masking policy, for example, masking manners corresponding to each file type. These policies may be preset in the policy manager 504, and may be updated periodically. The updated policy is pushed to the masking engine 21.

Masking algorithms used by the masking instrument 201, the masking instrument 203, and the masking instrument 502 may all include one or more of the following algorithms, or a combination thereof.
1. Replacement of values or character strings. That is, a fixed imaginary value is used to replace a real value or a character string. For example, a file that has not gone through the masking processing is shown in Table 1, and a file on which the masking processing has been performed is shown in Table 2.

**Table 1**

| No. | Code | Name | Address | Mobile Number | ID card No. | Operation time |
|---|---|---|---|---|---|---|
| 1 | 100000 | Zhang San | City A, Sichuan Province | 13805648611 | 511321198008080672 | 5/30/2020 15:01:56 |
| 2 | 100001 | Li Si | City A, Sichuan Province | 13359846953 | 51132119880580611 | 6/30/2020 16:56:03 |
| 3 | 100002 | Wang Wu | District B, Shenzhen | 18656569898 | 511210195601095582 | 4/30/2020 16:01:50 |
| 4 | 100003 | Zhao Liu | District C, Shenzhen | 18055659465 | 460033198009080651 | 7/30/2020 16:15:03 |
| 5 | 100004 | Qian Qi | District D, Shenzhen | 18145687898 | 460031198109180818 | 9/30/2020 17:20:50 |

For the mobile numbers in Table 1, a function of mobile=13800013800 is used to assign values to fields of the mobile numbers and replace the values with 13800013800. After the data is replaced, display values of the mobile phone numbers on which the masking has been performed are shown in Table 2.

**Table 2**

| No. | Code | Name | Address | Mobile Number | ID card No. | Operation time |
|---|---|---|---|---|---|---|
| 1 | 100000 | Zhang San | City A, Sichuan Province | 13800138000 | 511321198008080672 | 5/30/2020 15:01:56 |
| 2 | 100001 | Li Si | City A, Sichuan Province | 13800138000 | 51132119880580611 | 6/30/2020 16:56:03 |
| 3 | 100002 | Wang Wu | District B, Shenzhen | 13800138000 | 511210195601095582 | 4/30/2020 16:01:50 |
| 4 | 100003 | Zhao Liu | District C, Shenzhen | 13800138000 | 460033198009080651 | 7/30/2020 16:15:03 |
| 5 | 100004 | Qian Qi | District D, Shenzhen | 13800138000 | 460031198109180818 | 9/30/2020 17:20:50 |

2. Invalidation: Masking is performed on sensitive data through truncation, encryption, and hiding to make the sensitive data no longer useful. For example, addresses are replaced with ******. An effect of data invalidation is similar to an effect of data replacement. For example, the addresses in Table 1 are processed in a hidden manner. Specifically, fields of the addresses may be hidden by using a function of address="*******", to achieve a masking effect. The hidden data is shown in Table 3.

**Table 3**

| No. | Code | Name | Address | Mobile Number | ID card No. | Operation time |
|---|---|---|---|---|---|---|
| 1 | 100000 | Zhang San | ******* | 13805648611 | 511321198008080672 | 5/30/2020 15:01:56 |
| 2 | 100001 | Li Si | ******* | 13359846953 | 51132119880580611 | 6/30/2020 16:56:03 |
| 3 | 100002 | Wang Wu | ******* | 18656569898 | 511210195601095582 | 4/30/2020 16:01:50 |
| 4 | 100003 | Zhao Liu | ******* | 18055659465 | 460033198009080651 | 7/30/2020 16:15:03 |
| 5 | 100004 | Qian Qi | ******* | 18145687898 | 460031198109180818 | 9/30/2020 17:20:50 |

Optionally, in the foregoing example, the masking may also be performed on the fields of the addresses in a truncated manner, that is, only part of the information is hidden. Specifically, ****** may be added to the left three characters of the source character strings of the address by using a function of address=left(address, 3)+"******". The processed data is shown in Table 4.

**Table 4**

| No. | Code | Name | Address | Mobile Number | ID card No. | Operation time |
|---|---|---|---|---|---|---|
| 1 | 100000 | Zhang San | Sichuan Province*** | 13805648611 | 511321198008080672 | 5/30/2020 15:01:56 |
| 2 | 100001 | Li Si | Sichuan Province*** | 13359846953 | 51132119880580611 | 6/30/2020 16:56:03 |
| 3 | 100002 | Wang Wu | Shenzhen*** | 18656569898 | 511210195601095582 | 4/30/2020 16:01:50 |
| 4 | 100003 | Zhao Liu | Shenzhen*** | 18055659465 | 460033198009080651 | 7/30/2020 16:15:03 |
| 5 | 100004 | Qian Qi | Shenzhen*** | 18145687898 | 460031198109180818 | 9/30/2020 17:20:50 |

3. Randomization. Randomization means that random data is used to replace actual values or character strings, and randomness of the replacement values is maintained to simulate authenticity of the sample. For example, a randomly generated name is used to replace a real name, or a random number within a specified range is used to replace a real value. Specifically, a name may be randomized (a name is generated by randomly combining external dictionary tables A1 "surname.txt" and B1 "name.txt" by random combination) by using a function of A1(rand(A1.len())+1)+B1(rand(B1.len())+1). Display values of the randomized name are shown in Table 5.

**Table 5**

| No. | Code | Name | Address | Mobile Number | ID card No. | Operation time |
|---|---|---|---|---|---|---|
| 1 | 100000 | Zhang Yi | City A, Sichuan Province | 13805648611 | 511321198008080672 | 5/30/2020 15:01:56 |
| 2 | 100001 | Li Er | City A, Sichuan Province | 13359846953 | 51132119880580611 | 6/30/2020 16:56:03 |
| 3 | 100002 | Wang San | District B, Shenzhen | 18656569898 | 511210195601095582 | 4/30/2020 16:01:50 |
| 4 | 100003 | Zhao Si | District C, Shenzhen | 18055659465 | 460033198009080651 | 7/30/2020 16:15:03 |
| 5 | 100004 | Qian Wu | District D, Shenzhen | 18145687898 | 460031198109180818 | 9/30/2020 17:20:50 |

4. Offset and rounding. Offset and rounding means that digital data is changed through random shift. For example, the date 2018-01-02 8:12:25 is changed to 2018-01-02 8:00:00. Offset and rounding ensures data security and partial authenticity of data range. This function is of great value in the big data utilization environment. Specifically, a function of string (operatetime, "yyyy-MM-dd HH:00:00") may be used to format operation time into a format of "yyyy-MM-dd HH:00:00" based on an offset and rounding rule. Display values after the masking processing is performed on the operation time are shown in Table 6.

**Table 6**

| No. | Code | Name | Address | Mobile Number | ID card No. | Operation time |
|---|---|---|---|---|---|---|
| 1 | 100000 | Zhang San | City A, Sichuan Province | 13805648611 | 511321198008080672 | 5/30/2020 15:00:00 |
| 2 | 100001 | Li Si | City A, Sichuan Province | 13359846953 | 51132119880580611 | 6/30/2020 16:00:00 |
| 3 | 100002 | Wang Wu | District B, Shenzhen | 18656569898 | 511210195601095582 | 4/30/2020 16:00:00 |
| 4 | 100003 | Zhao Liu | District C, Shenzhen | 18055659465 | 460033198009080651 | 7/30/2020 16:0:00 |
| 5 | 100004 | Qian Qi | District D, Shenzhen | 18145687898 | 460031198109180818 | 9/30/2020 17:00:00 |

5. Mask shielding. Mask shielding is a powerful tool for performing masking on part of information of account data, such as bank card numbers or ID card numbers. It can be specified whether to hide all or part of the data (the range of the data to be hid, such as the last X characters and the middle X characters). For example, the masking is performed on a birth date of an ID card number through mask shielding. Display values of the ID card numbers on which the masking has been performed by using a function of left(string(idnumber), 6)+"********"+right(string(idnumber), 4) are shown in Table 7.

**Table 7**

| No. | Code | Name | Address | Mobile Number | ID card No. | Operation time |
|---|---|---|---|---|---|---|
| 1 | 100000 | Zhang San | City A, Sichuan Province | 13805648611 | 511321********0672 | 5/30/2020 15:01:56 |
| 2 | 100001 | Li Si | City A, Sichuan Province | 13359846953 | 511321********0611 | 6/30/2020 16:56:03 |
| 3 | 100002 | Wang Wu | District B, Shenzhen | 18656569898 | 511210********5582 | 4/30/2020 16:01:50 |
| 4 | 100003 | Zhao Liu | District C, Shenzhen | 18055659465 | 460033********0651 | 7/30/2020 16:15:03 |
| 5 | 100004 | Qian Qi | District D, Shenzhen | 18145687898 | 460031********0818 | 9/30/2020 |
| | | | | | | 17:20:50 |

Any one of the foregoing masking manners may be used, or several or all of the foregoing masking manners may be used at the same time. In addition, these masking manners are merely examples for description, and other masking manners are not excluded in this embodiment.

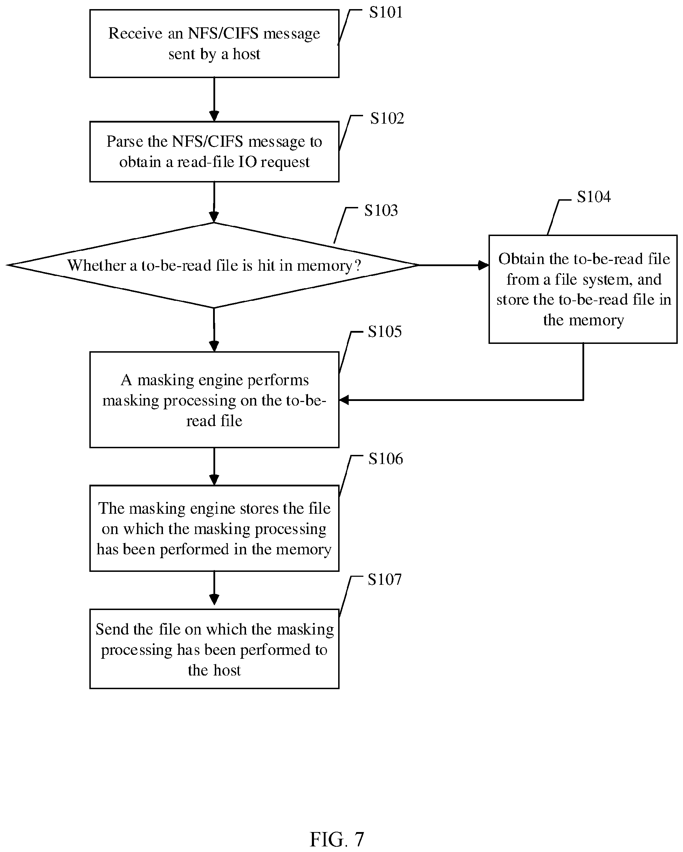

The following describes the data masking method provided in the embodiments with reference to application scenarios in FIG. 1 to FIG. 5. FIG. 7 is a schematic flowchart of a data masking method. As shown in FIG. 7, the method includes the following steps.

S101: A storage device 20 receives an NFS/CIFS message sent by a host 30. Herein, an example in which the storage device 20 is an NAS device is used for description. The NAS device may communicate with the host 30 by using an NFS protocol or a CIFS protocol. Therefore, a client of the host 30 may encapsulate a read-data command into an NFS message or a CIFS message, and then send the NFS message or the CIFS message to the storage device 20 by using a corresponding protocol. However, the NFS message or the CIFS message is merely an example, and a read/write command request may alternatively be encapsulated by using a format corresponding to another protocol. If the storage device 20 is an SAN device, the read/write command request may be encapsulated based on semantics of block data, and then sent to the storage device 20 by using a fiber channel network.

S102: The storage device 20 parses the NFS/CIFS message to obtain the read-data command. The storage device 20 has an NFS/CIFS serving end, and may parse the received message to obtain the read-data command. Reading a file is still used as an example in the following steps, and the read-data command includes an address of a to-be-read file. It may be understood that, if the storage device 20 is an SAN device, the read-data command carries an address of to-be-read block data.

S103: Determine whether a to-be-read file is hit in memory. If the to-be-read file is hit, S105 is performed; or if the to-be-read file is missed, S104 is performed. The storage device determines, according to the address of the to-be-read file, whether memory of the storage device stores the to-be-read file. If the memory already stores the to-be-read file, the storage device may directly process the file. Otherwise, the storage device needs to further obtain the to-be-read file from a hard disk according to the address.

S104: Obtain the to-be-read file from a file system, and store the to-be-read file in the memory. The to-be-read file is obtained from the file system. That is, a location of block data corresponding to the file in the hard disk is obtained from the file system according to the address of the file, and then the file is read from the location and stored in the memory.

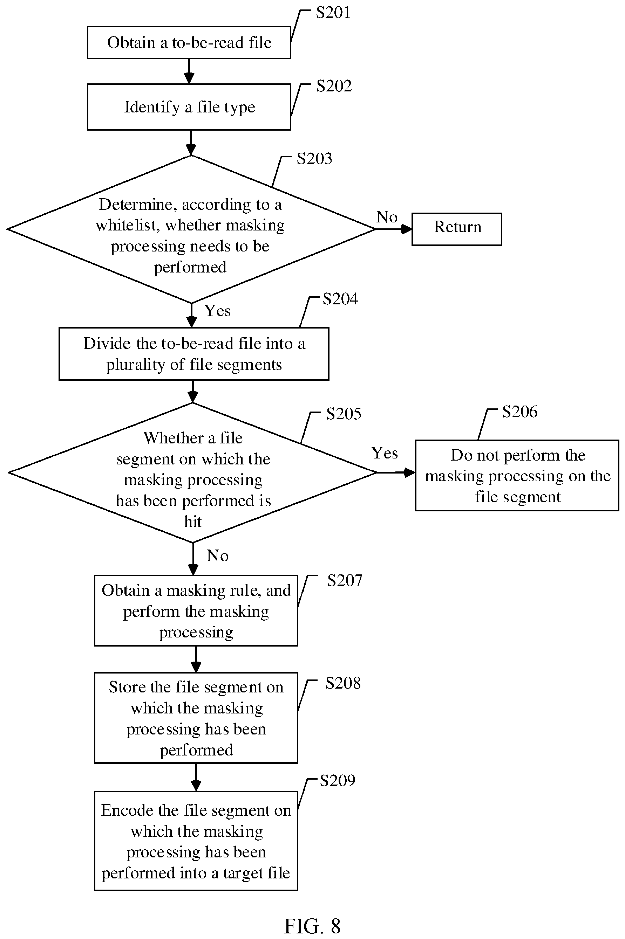

S105: A masking engine 21 performs the masking processing on the to-be-read file. After the storage device 20 finds the to-be-read file in the memory (regardless of whether the to-be-read file is directly hit in the memory or the file is obtained from the hard disk and stored in the memory), the storage device 20 can notify the masking engine 21 to perform the masking processing on the file. For an execution process of this step, refer to FIG. 8 and corresponding descriptions.

S106: The masking engine 21 stores the file on which the masking processing has been performed in the memory. The masking engine 21 is located inside the storage device 20, and sends the file to the memory of the storage device 20 after the masking processing is performed. It should be noted that when the masking engine 21 and the storage device 20 share same memory, the masking engine 21 stores the file in the memory of the masking engine 21 after the masking processing is completed, and then notifies a processor of the storage device that the masking processing is completed, and the file on which the masking processing has been performed can be read from the memory.

S107: The storage device 20 sends the file on which the masking processing has been performed to the host.

The foregoing read-data command is an input/output (I/O) command. It can be learned that masking performed on data is implemented on an IO path. In other words, the storage device performs masking on the to-be-read data in a process of responding to the read-data command. Compared with an offline masking manner, online masking improves masking efficiency. After the host receives data on which the masking has been performed, the host can directly test the data or use the data for another purpose without performing masking on the data by using a special masking device. In addition, because the storage device performs the masking processing on the data, no additional masking server needs to be deployed, so that costs are reduced.

For a specific implementation process of S105, refer to the example in FIG. 8. As shown in FIG. 8, that the masking engine 21 performs the masking processing on the to-be-read file includes the following steps.

S201: Obtain a to-be-read file. After the processor of the storage device obtains the to-be-read file, the processor of the storage device may send the file to the masking engine 21, or may notify the masking engine 21 to extract the file from the memory.

S202: Identify a file type. This step may be performed by a recognizer 201. There may be a plurality of types of to-be-read files, for example, a binary file, a Word file, an Excel file, and a PDF file. Based on an identification result, it can be determined which files need to go through the masking processing and which files do not need to go through the masking processing.

S203: Determine, according to a whitelist 202, whether the masking processing needs to be performed. If the masking processing does not need to be performed, the original data is used. If the masking processing needs to be performed, S204 is performed. The whitelist stores a file type on which the masking processing does not need to be performed, for example, a binary file.

S204: Divide the to-be-read file into a plurality of file segments.

S205: Determine, for each file segment, whether the file segment hits a file segment on which masking has been performed. If the file segment hits the file segment on which the masking has been performed, S206 is performed: Skip performing the masking processing on the file segment. If the file segment misses the file segment on which the masking has been performed, S207 is performed. The memory of the masking engine 21 may retain the file segment on which the masking processing has been performed. If one or more file segments of the to-be-read file are consistent with the file segment that has been retained by the masking engine 21 this time, the masking processing does not need to be performed on these file segments again. For a file segment that is missed, the masking processing needs to be performed on the file segment.

S207: Obtain a masking rule, and perform the masking processing. The masking rule may be set inside the masking engine 21 based on a user requirement, or may be pushed by an external masking engine 51 to the masking engine 21. For a specific masking process, refer to Table 1 to Table 7 and corresponding descriptions.

S208: Store the file segment on which the masking processing has been performed. Storing the file segment is intended to improve a hit rate of the file segment on which the masking has been performed and improve masking efficiency when another file is processed next time.

S209: Encode the file segment on which the masking processing has been performed into a target file. In S204, the to-be-read file is divided into several file segments, and these file segments need to be restored to an original file after the masking processing is completed.

S204 to S209 may be performed by a masking instrument 203.

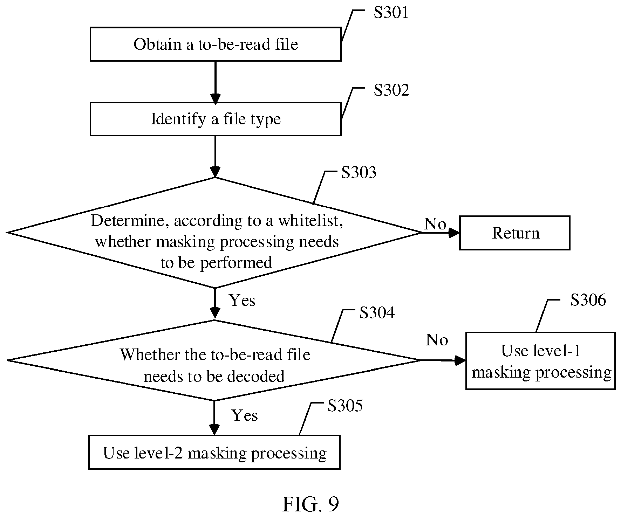

The example shown in FIG. 8 includes only level-1 masking. In some scenarios, the level-1 masking cannot be performed on the to-be-read file. In this case, level-2 masking needs to be introduced. A masking process after the level-2 masking is introduced is shown in FIG. 9. For example, the masking process includes the following steps.

S301: Obtain a to-be-read file. This step is similar to S201 shown in FIG. 8.

S302: Identify a file type. This step is similar to S202 shown in FIG. 8. Based on an identification result, it can be determined on which files the masking processing needs to be performed and on which files the masking processing does not need to be performed, and it can be further determined which masking manner is to be used for the files on which the masking processing needs to be performed.

S303: Determine, according to a whitelist, whether the masking processing needs to be performed. If the masking processing does not need to be performed, original data is used. If the masking processing needs to be performed, S304 is performed. This step is similar to S203 shown in FIG. 8.

S304: Determine whether the to-be-read file needs to be decoded. If the to-be-read file needs to be decoded, S305 is performed. If the to-be-read file does not need to be decoded, S306 is performed. Whether the to-be-read file is a file that needs to be decoded may be determined based on the file type. For example, a Word file, an Excel file, and a PDF file need to be decoded, and a text file and a log file each do not need to be decoded.

S305: Process the file by using the level-2 masking 210. In the level-2 masking processing, a content encoder 230 needs to first decode the to-be-read file, and process the decoded content in a manner similar to S204 to S209 shown in FIG. 8.

S306: Process the file by using the level-1 masking processing 200. Herein, reference may be made to the description of S204 to S209 shown in FIG. 8, and processing is performed in a similar manner.

In some application scenarios, the file type of the to-be-read file is neither applicable to the level-1 masking nor applicable to the level-2 masking. In this case, the masking engine 21 may send the file to the external masking engine 51, and the masking engine 51 completes the masking processing and then returns the file to the masking engine 21.

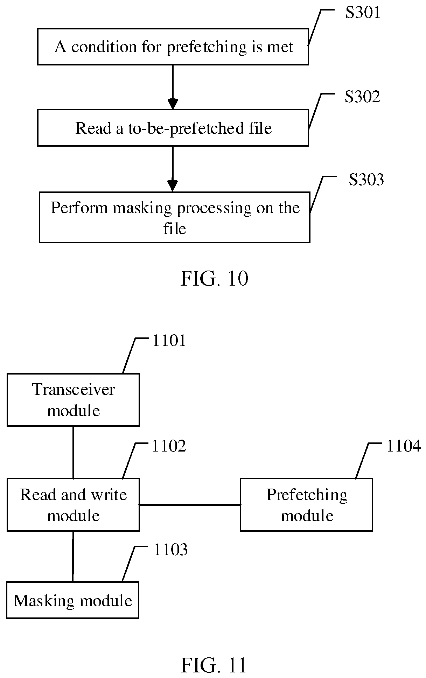

In the foregoing example, after the read-data command is received, the masking processing needs to be performed on the to-be-read file before the file is sent to the host. Although user privacy is protected, read-file efficiency is affected to some extent. Therefore, this example further provides a masking method for prefetched file. Refer to a schematic flowchart shown in FIG. 10. Masking on prefetched file is to perform the masking processing on a file before a read-data command is received. Therefore, the method shown in FIG. 10 occurs before any data masking method shown in FIG. 7 to FIG. 9, to improve a hit rate of a file segment on which the masking has been performed, thereby further improving read-data efficiency. It should be understood that the method shown in FIG. 10 may also occur after any data masking method shown in FIG. 7 to FIG. 9, to be prepared for next data reading. As shown in FIG. 10, the masking method for prefetched file includes the following steps.

S301: A prefetching engine 41 monitors whether a condition for prefetching is met. The condition for prefetching includes, but is not limited to, the following cases: (1) one or more files in a file system are modified; (2) the prefetching engine 41 finds that a file type of the one or more files in the file system meets a specified file type of the prefetched file; (3) a snapshot is created for one or more files in the file system; or (4) a specified prefetching period arrives.

S302: When the condition for prefetching is met, the prefetching engine 41 reads the to-be-prefetched file. If the method occurs before the read-data command shown in FIG. 7 to FIG. 9 is received, the to-be-prefetched file herein is the to-be-read file shown in FIG. 7 to FIG. 9, or a file segment contained in the to-be-read file partially overlaps a file segment contained in the to-be-read file. If the method occurs after the read-data command shown in FIG. 7 to FIG. 9 is received, the to-be-prefetched file herein is another file other than the to-be-read file.

S303: Perform the masking processing on the to-be-prefetched file. After the prefetching engine 41 reads the file, the prefetching engine 41 can send the file to the masking engine 21, and the masking engine 21 performs the masking processing on the file. For a specific process of performing the masking processing, refer to the descriptions in FIG. 7 to FIG. 9.

Referring to FIG. 11, FIG. 11 is a schematic diagram depicting a structure of a data masking apparatus according to an embodiment. The data masking apparatus is located inside the storage device 20, and includes a transceiver module 1101, a read and write module 1102, and a masking module 1103. The transceiver module 1101 is configured to receive a read-data command sent by a host. The read-data command is used to request to-be-read data. The read and write module 1102 is configured to obtain the to-be-read data in response to the read-data command. The masking module 1103 is configured to perform masking processing on the to-be-read data to obtain target data. The transceiver module 1101 is further configured to send the target data to the host.

Optionally, the masking module 1103 is specifically configured to determine whether the masking processing needs to be performed on the to-be-read data; obtain a corresponding masking manner through matching based on a type of the to-be-read data when a determining result is that the masking processing needs to be performed on the to-be-read data, where the masking manner includes level-1 masking processing or level-2 masking processing; and perform the masking processing on the to-be-read data in the masking manner corresponding to the to-be-read data.

Optionally, when the masking manner corresponding to the to-be-read data is the level-1 masking processing, the masking module 1103 is specifically configured to divide the to-be-read data into a plurality of file segments. The level-1 masking processing is performed on the plurality of file segments. The file segments on which the level-1 masking processing has been performed are combined to obtain the target data.

Optionally, when the masking module 1103 performs the level-1 masking processing on the plurality of file segments, the masking module 1103 is specifically configured to determine, for each file segment in the plurality of file segments, whether the file segment hits a file segment on which masking has been performed and that is stored in the storage device; and if the file segment hits the file segment on which the masking has been performed and that is stored in the storage device, skip performing the level-1 masking processing on the file segment; or if the file segment misses the file segment on which the masking has been performed and that is stored in the storage device, perform the level-1 masking processing on the file segment.

Optionally, when the masking manner corresponding to the to-be-read data is the level-2 masking processing, the masking module is specifically configured to decode the to-be-read data to obtain decoded file content. The decoded file content is divided into a plurality of file segments. The level-2 masking processing is performed on the plurality of file segments. The file segments on which the level-2 masking processing has been performed are encoded to obtain the target data.

Optionally, the read and write module 1102 is further configured to store the file segments on which the level-1 masking processing or the level-2 masking processing has been performed.

Optionally, the apparatus further includes a prefetching module 1104. The prefetching module 1104 is configured to obtain other to-be-read data from a hard disk of the storage device when a condition for prefetching data is met. The masking module 1103 is further configured to perform the masking processing on the other to-be-read data. The prefetching module 1104 is further configured to send the other to-be-read data on which the masking has been performed to the host when a command that is sent by the host and that is used to read the other to-be-read data is received.

Optionally, the condition for prefetching data includes, but is not limited to, the following cases: the other to-be-read data is modified; it is found that a type of the other to-be-read data meets a specified type of data that is to be prefetched; a snapshot for the other to-be-read data is created; or a specified prefetching period arrives.

The transceiver module 1101, the read and write module 1102, the masking module 1103, and the prefetching module 1104 may all be implemented by a processor inside the storage device by invoking a program in a memory, or may be independently implemented by the processor. The masking module 1103 is the masking engine 21 shown in FIG. 3 or FIG. 4. The masking module 1103 may be implemented by a processor by invoking a program in a memory, or may be independently implemented by the processor, or may be a programmable electronic component, for example, a dedicated processing chip such as a data processing unit (DPU), a graphics processing unit (GPU), or an embedded neural-network processor (NPU). The prefetching module 1104 is the prefetching engine 41 shown in FIG. 3 or FIG. 4. The prefetching module 1104 may be implemented by a processor by invoking a program in a memory, or may be independently implemented by the processor, or may be a programmable electronic component, for example, a DPU, a GPU, or an NPU.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital versatile disc (DVD)), a semiconductor medium (for example, a solid-state disk (SSD)), or the like.

A person of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, a compact disc, or the like.

In embodiments of this application, unless otherwise stated or there is a logical conflict, terms and/or descriptions between different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

The foregoing descriptions are merely embodiments of this application, but are not intended to limit this application. Any modification, equivalent replacement, or improvement made without departing from the principle of this application should fall within the protection scope of this application.

## Claims

1. A data masking method, wherein the method is performed by a storage device (20), and the method comprises:
receiving a read-data command sent by a host (30), wherein the read-data command is used to request to-be-read data;
obtaining the to-be-read data in response to the read-data command;
performing masking processing on the to-be-read data to obtain target data;
sending the target data to the host (30);
obtaining other to-be-read data from a hard disk of the storage device (20) when a condition for prefetching data is met;
performing the masking processing on the other to-be-read data; and
sending the other to-be-read data on which the masking has been performed to the host (30) when a command that is sent by the host (30) and that is used to read the other to-be-read data is received.

2. The method according to claim 1, wherein the to-be-read data is unstructured data.

3. The method according to claim 2, wherein the unstructured data is a file.

4. The method according to claim 3, wherein the performing masking processing on the to-be-read data comprises:
determining whether the masking processing needs to be performed on the to-be-read data;
obtaining a corresponding masking manner through matching based on a type of the to-be-read data when a determining result is that the masking processing needs to be performed on the to-be-read data, wherein the masking manner comprises level-1 masking processing or level-2 masking processing, wherein level-1 masking applies to a file that does not need to be decoded and level-2 masking applies to a file that needs to be decoded; and
performing the masking processing on the to-be-read data in the masking manner corresponding to the to-be-read data.

5. The method according to claim 4, wherein when the masking manner corresponding to the to-be-read data is the level-1 masking processing, the performing masking processing on the to-be-read data comprises:
dividing the to-be-read data into a plurality of file segments;
performing the level-1 masking processing on the plurality of file segments; and
combining the file segments on which the level-1 masking processing has been performed to obtain the target data.

6. The method according to claim 5, wherein the performing the level-1 masking processing on the plurality of file segments comprises:
determining, for each file segment in the plurality of file segments, whether the file segment hits a file segment on which masking has been performed and that is stored in the storage device (20); and
if the file segment hits the file segment on which the masking has been performed and that is stored in the storage device (20), skipping performing the level-1 masking processing on the file segment; or
if the file segment misses the file segment on which the masking has been performed and that is stored in the storage device (20), performing the level-1 masking processing on the file segment.

7. The method according to claim 6, wherein the type of the to-be-read data is a text file or a log file.

8. The method according to claim 4, wherein when the masking manner corresponding to the to-be-read data is the level-2 masking processing, the performing masking processing on the to-be-read data comprises:
decoding the to-be-read data to obtain decoded file content;
dividing the decoded file content into a plurality of file segments;
performing the level-2 masking processing on the plurality of file segments; and
encoding the file segments on which the level-2 masking processing has been performed to obtain the target data.

9. The method according to claim 8, wherein the type of the to-be-read data is a Word file or a PDF file.

10. The method according to claim 5 or claim 8, wherein the method further comprises:
storing the file segments on which the level-1 masking processing or the level-2 masking processing has been performed.

11. The method according to any one of claims 1 to 10, wherein the condition for prefetching data comprises, but is not limited to, the following cases:
the other to-be-read data is modified;
it is found that a type of the other to-be-read data meets a specified type of data that is to be prefetched;
a snapshot for the other to-be-read data is created; or
a specified prefetching period arrives.

12. A data masking apparatus, wherein the apparatus is located inside a storage device (20), and the apparatus comprises a transceiver module (1101), a read and write module (1102), a masking module (1103), and a prefetching module (1104), wherein
the transceiver module (1101) is configured to receive a read-data command sent by a host (30), and the read-data command is used to request to-be-read data;
the read and write module (1102) is configured to obtain the to-be-read data in response to the read-data command;
the masking module (1103) is configured to perform masking processing on the to-be-read data to obtain target data;
the transceiver module (1101) is further configured to send the target data to the host (30);
the prefetching module (1104) is configured to obtain other to-be-read data from a hard disk of the storage device (20) when a condition for prefetching data is met;
the masking module (1103) is further configured to perform masking processing on the other to-be-read data; and
the prefetching module (1104) is further configured to send the other to-be-read data on which the masking has been performed to the host (30) when a command that is sent by the host (30) and that is used to read the other to-be-read data is received.

13. The apparatus according to claim 12, wherein the to-be-read data is unstructured data.

14. A storage device (20), comprising a processor and a memory, wherein the memory stores a program, and the processor executes the program to implement the method according to any one of claims 1 to 11.

## Patentansprüche

1. Datenmaskierungsverfahren, wobei das Verfahren durch eine Speichervorrichtung (20) durchgeführt wird und das Verfahren Folgendes umfasst:
Empfangen eines durch einen Host (30) gesendeten Lesedatenbefehls, wobei der Lesedatenbefehl zum Anfordern zu lesender Daten verwendet wird;
Erhalten der zu lesenden Daten als Reaktion auf den Lesedatenbefehl;
Durchführen einer Maskierungsverarbeitung an den zu lesenden Daten, um Zieldaten zu erhalten;
Senden der Zieldaten an den Host (30);
Erhalten anderer zu lesender Daten von einer Festplatte der Speichervorrichtung (20), wenn eine Bedingung zum Vorabrufen von Daten erfüllt ist;
Durchführen der Maskierungsverarbeitung an den zu lesenden Daten; und
Senden der anderen zu lesenden Daten, an denen die Maskierung durchgeführt wurde, an den Host (30), wenn ein Befehl, der durch den Host (30) gesendet wird und der zum Lesen der anderen zu lesenden Daten verwendet wird, empfangen wird.

2. Verfahren nach Anspruch 1, wobei die zu lesenden Daten unstrukturierte Daten sind.

3. Verfahren nach Anspruch 2, wobei die unstrukturierten Daten eine Datei sind.

4. Verfahren nach Anspruch 3, wobei das Durchführen einer Maskierungsverarbeitung an den zu lesenden Daten Folgendes umfasst:
Bestimmen, ob die Maskierungsverarbeitung an den zu lesenden Daten durchgeführt werden muss;
Erhalten einer entsprechenden Maskierungsweise durch Abgleichen basierend auf einem Typ der zu lesenden Daten, wenn ein Bestimmungsergebnis lautet, dass die Maskierungsverarbeitung an den zu lesenden Daten durchgeführt werden muss, wobei die Maskierungsweise Stufe-1-Maskierungsverarbeitung oder Stufe-2-Maskierungsverarbeitung umfasst, wobei Stufe-1-Maskierung für eine Datei gilt, die nicht decodiert werden muss, und Stufe-2-Maskierung für eine Datei gilt, die decodiert werden muss; und
Durchführen der Maskierungsverarbeitung an den zu lesenden Daten auf die Maskierungsweise, die den zu lesenden Daten entspricht.

5. Verfahren nach Anspruch 4, wobei, wenn die Maskierungsweise, die den zu lesenden Daten entspricht, die Stufe-1-Maskierungsverarbeitung ist, das Durchführen einer Maskierungsverarbeitung an den zu lesenden Daten Folgendes umfasst:
Teilen der zu lesenden Daten in mehrere Dateisegmente;
Durchführen der Stufe-1-Maskierungsverarbeitung an den mehreren Dateisegmenten; und
Kombinieren der Dateisegmente, an denen die Stufe-1-Maskierungsverarbeitung durchgeführt wurde, um die Zieldaten zu erhalten.

6. Verfahren nach Anspruch 5, wobei das Durchführen der Stufe-1-Maskierungsverarbeitung an den mehreren Dateisegmenten Folgendes umfasst:
Bestimmen, für jedes Dateisegment in den mehreren Dateisegmenten, ob das Dateisegment einem Dateisegment entspricht, an dem eine Maskierung durchgeführt wurde und das in der Speichervorrichtung (20) gespeichert ist; und
wenn das Dateisegment mit dem Dateisegment, an dem die Maskierung durchgeführt wurde und das in der Speichervorrichtung (20) gespeichert ist, übereinstimmt, Überspringen des Durchführens der Stufe-1-Maskierungsverarbeitung an dem Dateisegment; oder
wenn das Dateisegment nicht mit dem Dateisegment, an dem die Maskierung durchgeführt wurde und das in der Speichervorrichtung (20) gespeichert ist, übereinstimmt, Durchführen der Stufe-1-Maskierungsverarbeitung an dem Dateisegment.

7. Verfahren nach Anspruch 6, wobei der Typ der zu lesenden Daten eine Textdatei oder eine Protokolldatei ist.

8. Verfahren nach Anspruch 4, wobei, wenn die Maskierungsweise, die den zu lesenden Daten entspricht, die Stufe-2-Maskierungsverarbeitung ist, das Durchführen einer Maskierungsverarbeitung an den zu lesenden Daten Folgendes umfasst:
Decodieren der zu lesenden Daten, um decodierten Dateiinhalt zu erhalten;
Teilen des decodierten Dateiinhalts in mehrere Dateisegmente;
Durchführen der Stufe-2-Maskierungsverarbeitung an den mehreren Dateisegmenten; und
Codieren der Dateisegmente, an denen die Stufe-2-Maskierungsverarbeitung durchgeführt wurde, um die Zieldaten zu erhalten.

9. Verfahren nach Anspruch 8, wobei der Typ der zu lesenden Daten eine Word-Datei oder eine PDF-Datei ist.

10. Verfahren nach Anspruch 5 oder Anspruch 8, wobei das Verfahren ferner Folgendes umfasst:
Speichern der Dateisegmente, an denen die Stufe-1-Maskierungsverarbeitung oder die Stufe-2-Maskierungsverarbeitung durchgeführt wurde.

11. Verfahren nach einem der Ansprüche 1 bis 10, wobei die Bedingung zum Vorabrufen von Daten die folgenden Fälle umfasst, jedoch nicht darauf beschränkt ist:
die anderen zu lesenden Daten werden modifiziert;
es wird festgestellt, dass ein Typ der anderen zu lesenden Daten einen spezifizierten Typ von Daten, die vorabgerufen werden sollen, erfüllt;
es wird ein Schnappschuss für die anderen zu lesenden Daten erstellt; oder
ein spezifizierter Vorabrufzeitraum beginnt.

12. Datenmaskierungseinrichtung, wobei sich die Einrichtung in einer Speichervorrichtung (20) befindet und die Einrichtung ein Sendeempfängermodul (1101), ein Lese- und Schreibmodul (1102), ein Maskierungsmodul (1103) und ein Vorabrufmodul (1104) umfasst, wobei
das Sendeempfängermodul (1101) ausgelegt ist zum Empfangen eines durch einen Host (30) gesendeten Lesedatenbefehls und der Lesedatenbefehl zum Anfordern zu lesender Daten verwendet wird;
das Lese- und Schreibmodul (1102) ausgelegt ist zum Erhalten der zu lesenden Daten als Reaktion auf den Lesedatenbefehl;
das Maskierungsmodul (1103) ausgelegt ist zum Durchführen einer Maskierungsverarbeitung an den zu lesenden Daten, um Zieldaten zu erhalten;
das Sendeempfängermodul (1101) ferner ausgelegt ist zum Senden der Zieldaten an den Host (30);
das Vorabrufmodul (1104) ausgelegt ist zum Erhalten anderer zu lesender Daten von einer Festplatte der Speichervorrichtung (20), wenn eine Bedingung zum Vorabrufen von Daten erfüllt ist;
das Maskierungsmodul (1103) ferner ausgelegt ist zum Durchführen der Maskierungsverarbeitung an den zu lesenden Daten; und
das Vorabrufmodul (1104) ferner ausgelegt ist zum Senden der anderen zu lesenden Daten, an denen die Maskierung durchgeführt wurde, an den Host (30), wenn ein Befehl, der durch den Host (30) gesendet wird und der zum Lesen der anderen zu lesenden Daten verwendet wird, empfangen wird.

13. Einrichtung nach Anspruch 12, wobei die zu lesenden Daten unstrukturierte Daten sind.

14. Speichervorrichtung (20), die einen Prozessor und einen Speicher umfasst, wobei der Speicher ein Programm speichert und der Prozessor das Programm ausführt, um das Verfahren nach einem der Ansprüche 1 bis 11 zu implementieren.

## Revendications

1. Procédé de masquage de données, le procédé étant réalisé par un dispositif de stockage (20), et le procédé comprenant :
la réception d'une commande de lecture de données envoyée par un hôte (30), dans lequel la commande de lecture de données est utilisée pour demander des données à lire ;
l'obtention des données à lire en réponse à la commande de lecture de données ;
la réalisation d'un traitement de masquage sur les données à lire pour obtenir des données cibles ;
l'envoi des données cibles à l'hôte (30) ;
l'obtention d'autres données à lire à partir d'un disque dur du dispositif de stockage (20) lorsqu'une condition de prélecture de données est remplie ;
la réalisation du traitement de masquage sur les autres données à lire ; et
l'envoi à l'hôte (30) des autres données à lire sur lesquelles le masquage a été réalisé lorsqu'une commande qui est envoyée par l'hôte (30) et qui est utilisée pour lire les autres données à lire est reçue.

2. Procédé selon la revendication 1, dans lequel les données à lire sont des données non structurées.

3. Procédé selon la revendication 2, dans lequel les données non structurées sont un fichier.

4. Procédé selon la revendication 3, dans lequel la réalisation du traitement de masquage sur les données à lire comprend :
la détermination de la nécessité ou non de réaliser le traitement de masquage sur les données à lire ;
l'obtention d'une manière de masquage correspondante par le biais d'une mise en correspondance sur la base d'un type des données à lire lorsqu'un résultat de détermination indique que le traitement de masquage doit être réalisé sur les données à lire, dans lequel la manière de masquage comprend un traitement de masquage de niveau 1 ou un traitement de masquage de niveau 2, dans lequel le masquage de niveau 1 s'applique à un fichier qui n'a pas besoin d'être décodé et le masquage de niveau 2 s'applique à un fichier qui a besoin d'être décodé ; et
la réalisation du traitement de masquage sur les données à lire de la manière de masquage correspondant aux données à lire.

5. Procédé selon la revendication 4, dans lequel, lorsque la manière de masquage correspondant aux données à lire est le traitement de masquage de niveau 1, la réalisation du traitement de masquage sur les données à lire comprend :
la division des données à lire en une pluralité de segments de fichier ;
la réalisation du traitement de masquage de niveau 1 sur la pluralité de segments de fichier ; et
la combinaison des segments de fichier sur lesquels le traitement de masquage de niveau 1 a été réalisé pour obtenir les données cibles.

6. Procédé selon la revendication 5, dans lequel la réalisation du traitement de masquage de niveau 1 sur la pluralité de segments de fichiers comprend :
la détermination, pour chaque segment de fichier de la pluralité de segments de fichier, établissant si le segment de fichier coïncide avec un segment de fichier sur lequel un masquage a été réalisé et qui est stocké dans le dispositif de stockage (20) ; et
si le segment de fichier coïncide avec le segment de fichier sur lequel le masquage a été réalisé et qui est stocké dans le dispositif de stockage (20), le saut de la réalisation du traitement de masquage de niveau 1 sur le segment de fichier ; ou
si le segment de fichier ne coïncide pas avec un segment de fichier sur lequel le masquage a été réalisé et qui est stocké dans le dispositif de stockage (20), la réalisation du traitement de masquage de niveau 1 sur le segment de fichier.

7. Procédé selon la revendication 6, dans lequel le type de données à lire est un fichier texte ou un fichier journal.

8. Procédé selon la revendication 4, dans lequel lorsque la manière de masquage correspondant aux données à lire est le traitement de masquage de niveau 2, la réalisation du traitement de masquage sur les données à lire comprend :
le décodage des données à lire pour obtenir un contenu de fichier décodé ;
la division du contenu de fichier décodé en une pluralité de segments de fichier ;
la réalisation du traitement de masquage de niveau 2 sur la pluralité de segments de fichier ; et
le codage des segments de fichier sur lesquels le traitement de masquage de niveau 2 a été réalisé pour obtenir les données cibles.

9. Procédé selon la revendication 8, dans lequel le type de données à lire est un fichier Word ou un fichier PDF.

10. Procédé selon la revendication 5 ou la revendication 8, dans lequel le procédé comprend en outre :
le stockage des segments de fichier sur lesquels le traitement de masquage de niveau 1 ou le traitement de masquage de niveau 2 a été réalisé.

11. Procédé selon l'une quelconque des revendications 1 à 10, dans lequel la condition pour la prélecture de données comprend, mais de façon non limitative, les cas suivants :
les autres données à lire sont modifiées ;
on constate qu'un type des autres données à lire correspond à un type spécifié de données à prélire ;
un instantané pour les autres données à lire est créé ; ou
une période de prélecture spécifiée arrive.

12. Appareil de masquage de données, l'appareil étant situé à l'intérieur d'un dispositif de stockage (20), et l'appareil comprenant un module émetteur-récepteur (1101), un module de lecture et d'écriture (1102), un module de masquage (1103), et un module de prélecture (1104), dans lequel
le module émetteur-récepteur (1101) est configuré pour recevoir une commande de lecture de données envoyée par un hôte (30), et la commande de lecture de données est utilisée pour demander des données à lire ;
le module de lecture et d'écriture (1102) est configuré pour obtenir les données à lire en réponse à la commande de lecture des données ;
le module de masquage (1103) est configuré pour réaliser un traitement de masquage sur les données à lire afin d'obtenir des données cibles ;
le module émetteur-récepteur (1101) est en outre configuré pour envoyer les données cibles à l'hôte (30) ;
le module de prélecture (1104) est configuré pour obtenir d'autres données à lire à partir d'un disque dur du dispositif de stockage (20) lorsqu'une condition de prélecture des données est remplie ;
le module de masquage (1103) est en outre configuré pour réaliser un traitement de masquage sur les autres données à lire ; et
le module de prélecture (1104) est en outre configuré pour envoyer à l'hôte (30) les autres données à lire sur lesquelles le masquage a été réalisé lorsqu'une commande qui est envoyée par l'hôte (30) et qui est utilisée pour lire les autres données à lire est reçue.

13. Appareil selon la revendication 12, dans lequel les données à lire sont des données non structurées.

14. Dispositif de stockage (20), comprenant un processeur et une mémoire, dans lequel la mémoire stocke un programme, et le processeur exécute le programme pour mettre en œuvre le procédé selon l'une quelconque des revendications 1 à 11.
